# FASCICULE DE BREVET EUROPEEN

(11) **EP 0 864 544 B1**
(45) Date de publication et mention de la délivrance du brevet: **09.08.2000**
(21) Numéro de dépôt: 98400537.1
(22) Date de dépôt: 06.03.1998
(51) Int. Cl.: C03B 37/012

(54) **Procédé de fabrication de préformes pour fibres optiques multicoeurs**
Verfahren zum Herstellen von Vorformen für optische Mehrkernfasern
Process for manufacture of preforms for multicore optical fibres

(30) Priorité: 10.03.1997 FR 9702793
(43) Date de publication de la demande: 16.09.1998
(73) Titulaire: FRANCE TELECOM, 75015 Paris (FR)
(72) Inventeur: Hardy, Isabelle, 22700 Louannec (FR); Boscher, Daniel, 22560 Trebeurden (FR); Grosso, Philippe, 22300 Lannion (FR)
(74) Mandataire: Dubois-Chabert, Guy

(56) Documents cités:
- EP-A- 0 519 834
- EP-A- 0 611 973
- EP-A- 0 713 844
- US-A- 3 930 714
- PATENT ABSTRACTS OF JAPAN vol. 6, no. 231 (C-135), 17 novembre 1982 & JP 57 135736 A (NT&T CORP.), 21 août 1982,
- PATENT ABSTRACTS OF JAPAN vol. 11, no. 300 (C-448), 29 septembre 1987 & JP 62 091438 A (FURUKAWA ELECTRIC CO., LTD.), 25 avril 1987,

## Description

### Domaine technique

La présente invention concerne un procédé de fabrication de préformes pour fibres optiques multicoeurs.

Elle s'applique notamment au domaine des télécommunications par fibres optiques et plus particulièrement à la fabrication de fibres optiques multicoeurs pour un réseau de distribution.

### Etat de la technique antérieure

On connaît déjà un procédé de fabrication de préformes pour fibres optiques multicoeurs par le document (1) qui, comme les autres documents cités par la suite, est mentionné à la fin de la présente description.

On se reportera à ce document (1).

Selon ce document (1), on réalise un assemblage de préformes élémentaires et un barreau, qui constitue une amorce d'étirage, est soudé à une extrémité de l'assemblage.

Cet assemblage est fibré sans que les préformes élémentaires soient soudées les unes aux autres, la fusion de ces préformes étant assurée au cours du fibrage.

Ceci oblige, pour obtenir à la fois, au cours du fibrage, la soudure des préformes élémentaires et une déformation de l'assemblage conduisant à une fibre multicoeur homothétique de cet assemblage, à effectuer un fibrage à haute température et donc de déformer la fibre multicoeur au-delà des limites acceptables.

Selon le document (2), une préforme multicoeur est obtenue par recharge, à l'aide de grains de silice, de préformes élémentaires qui sont assemblées autour d'un noyau de silice.

Dans ce cas, il est très difficile d'obtenir une fibre optique multicoeur homogène et, de ce fait, la résistance mécanique de cette fibre laisse à désirer.

### Exposé de l'invention

La présente invention a pour but de remédier aux inconvénients précédents.

Elle a pour objet un procédé de fabrication de préformes multicoeurs non déformées et suffisamment homogènes (parfaitement soudées) pour obtenir, par fibrage, des fibres optiques multicoeurs ayant de très bonnes caractéristiques géométriques et une très grande résistance mécanique.

De façon précise, la présente invention a pour objet un procédé de fabrication d'une préforme multicoeur destinée à fournir, par étirage de cette préforme, une fibre optique multicoeur, ce procédé étant caractérisé en ce qu'il comprend les étapes suivantes :
- on fabrique une pluralité de préformes élémentaires,
- on effectue un premier usinage de ces préformes élémentaires de manière à obtenir, après assemblage de ces préformes, le modèle géométrique choisi pour la fibre optique multicoeur,
- on effectue un deuxième usinage des préformes élémentaires de manière que l'assemblage de celles-ci présente au moins un trou longitudinal,
- on assemble les préformes élémentaires ainsi usinées suivant le modèle géométrique choisi, et
- on utilise un four à induction, de préférence horizontal, qui est capable de porter l'assemblage à sa température de fusion et par rapport auquel cet assemblage, par exemple monté dans un tour verrier, subit des mouvements relatifs de translation et de rotation, pour chauffer l'assemblage et souder les préformes élémentaires les unes aux autres, tout en mettant chaque trou en dépression, chaque trou disparaissant par rétreint au cours du soudage des préformes élémentaires les unes aux autres.

De préférence, l'assemblage est préétiré de quelques dizaines de millimètres, d'une façon précise et régulière, pendant qu'il est chauffé.

La vitesse de préétirage de l'assemblage est par exemple de l'ordre de 4 mm/mn.

Certes, le document (3), auquel on se reportera, décrit un four à induction qui est utilisable dans la présente invention.

Cependant, dans ce document (3), il est seulement question d'utiliser ce four à induction pour effectuer un dépôt chimique en phase vapeur dans un tube de silice et rétreindre ("collapse") ce tube pour obtenir un barreau plein.

Il n'est pas question de la soudure d'un assemblage de préformes élémentaires dans ce document (3).

Pour montrer l'intérêt de l'invention, on indique, à titre d'exemple, que le fibrage direct, parce qu'il est nécessairement "chaud" (la tension de fibrage vaut 40g), déforme la fibre de 3% environ, pour une résistance mécanique de 3,5 daN.

Lorsqu'on applique le procédé objet de l'invention, la déformation de la fibre multicoeur n'excède pas 7‰ et la résistance mécanique a une valeur classique, voisine de 5 daN.

Selon un mode de mise en oeuvre préféré du procédé objet de l'invention, les préformes élémentaires sont fabriquées avec une grande précision, cette précision étant compatible avec celle qui est désirée pour la fibre multicoeur, comme cela est expliqué dans le document (1) :
- définition des positions des guides optiques élémentaires de la fibre multicoeur à quelques dixièmes de micromètres près,
- définition du diamètre du coeur ("core") et du diamètre de la gaine optique ("optical cladding") de ces guides élémentaires à quelques dixièmes de micromètres près, et
- excentrement entre ce coeur et cette gaine optique de l'ordre du dixième de micromètres.

On rappelle qu'un procédé de très grande précision, utilisable pour fabriquer les préformes élémentaires, est décrit dans le document (4).

Selon un mode de mise en oeuvre particulier du procédé objet de l'invention, le premier usinage comprend la formation, sur chaque préforme élémentaire, d'un ou d'une pluralité de méplats parallèlement à l'axe de cette préforme, permettant l'assemblage des préformes élémentaires suivant le modèle géométrique choisi.

Selon une réalisation particulière, on fabrique quatre préformes élémentaires de même diamètre extérieur, le premier usinage comprend la formation, sur chaque préforme élémentaire, de deux méplats longitudinaux et perpendiculaires qui définissent une arête vive, de manière à obtenir, par assemblage des préformes élémentaires, une préforme multicoeur à quatre coeurs, et le deuxième usinage comprend la formation d'un chanfrein sur l'arête vive de chaque préforme élémentaire de manière que l'assemblage comprenne un trou central longitudinal.

Dans ce cas, la largeur du chanfrein de chaque préforme élémentaire est de préférence de l'ordre de 5% du diamètre de cette préforme élémentaire.

L'assemblage peut comprendre N préformes élémentaires de même diamètre extérieur, N étant un nombre entier différent de 4.

Dans ce cas, le deuxième usinage peut comprendre la formation d'au moins un chanfrein sur chaque préforme élémentaire, les chanfreins étant choisis pour obtenir des trous longitudinaux dans l'assemblage et casser les arêtes vives des préformes élémentaires.

De préférence, le four à induction est horizontal.

On peut utiliser le four à induction horizontal qui est décrit dans le document (3) et qui comprend un suscepteur en graphite ou en zircone.

De préférence, on soude respectivement aux deux extrémités de l'assemblage un barreau et un tube à travers lequel chaque trou est mis en dépression.

La dépression appliquée à chaque trou est par exemple égale environ à -30 mbars (environ -3000 Pa).

La vitesse de translation de l'assemblage par rapport au four peut être égale à 15 mm par minute.

### Brève description des dessins

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue en coupe transversale schématique d'une préforme élémentaire utilisable dans la présente invention pour former une préforme à quatre coeurs,
- la figure 2 est une vue en coupe transversale schématique de la préforme de la figure 1 qui a été chanfreinée pour la mise en oeuvre de l'invention,
- la figure 3 est une vue en coupe transversale schématique d'un assemblage de quatre préformes de même diamètre extérieur,
- la figure 4 illustre schématiquement un four à induction pour la mise en oeuvre de l'invention, et
- la figure 5 est une vue en coupe transversale schématique d'un assemblage comprenant sept préformes élémentaires, utilisable pour la mise en oeuvre de l'invention.

### Exposé détaillé de modes de réalisation particuliers

On décrit ci-après un exemple de réalisation de l'invention, permettant la fabrication d'une préforme à quatre coeurs qui permet d'obtenir, par étirage de cette préforme, une fibre optique à quatre coeurs.

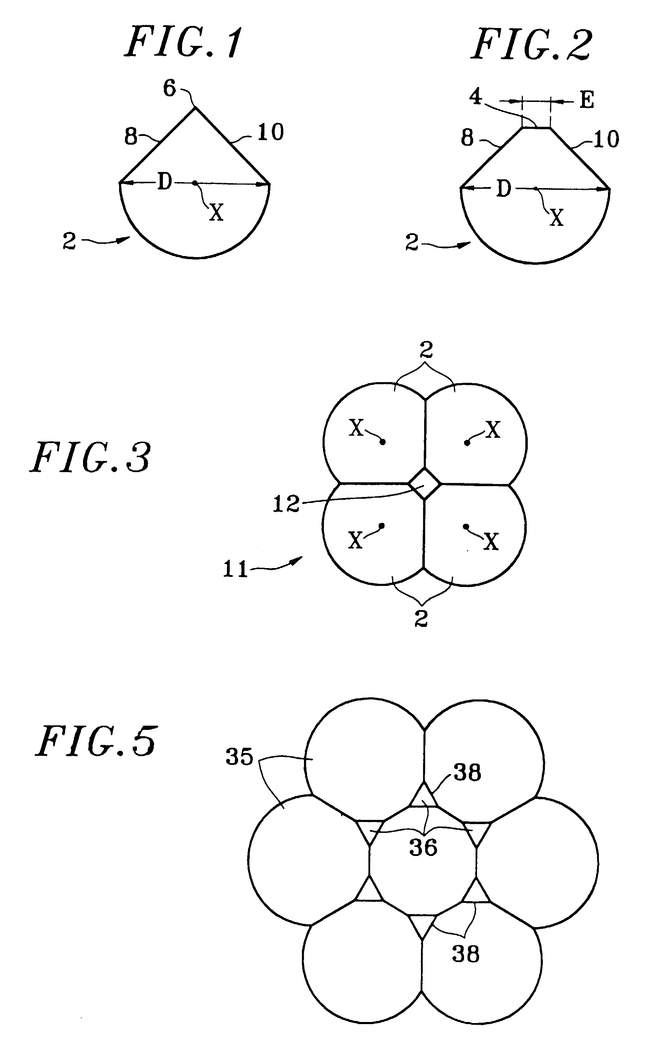

Il s'agit d'une préforme dont le modèle géométrique est identique à celui de l'assemblage qui est représenté sur la figure 3 du document (1).

Cette préforme à quatre coeurs est aussi du genre de celle qui conduit, par étirage, à la fibre optique multicoeur de la figure 9 de ce document (1).

Pour fabriquer la préforme à quatre coeurs, on commence par fabriquer quatre préformes élémentaires cylindriques de même diamètre extérieur et de grande précision, à un seul coeur.

Cette grande précision est relative à la flèche, à l'excentrement, au diamètre de coeur, au diamètre de gaine optique et à la régularité géométrique longitudinale de chaque préforme.

Cette grande précision est choisie de manière à obtenir, après étirage de la préforme multicoeur fabriquée, la grande précision souhaitée pour la fibre multicoeur.

On réalise ensuite un premier usinage de chaque préforme élémentaire.

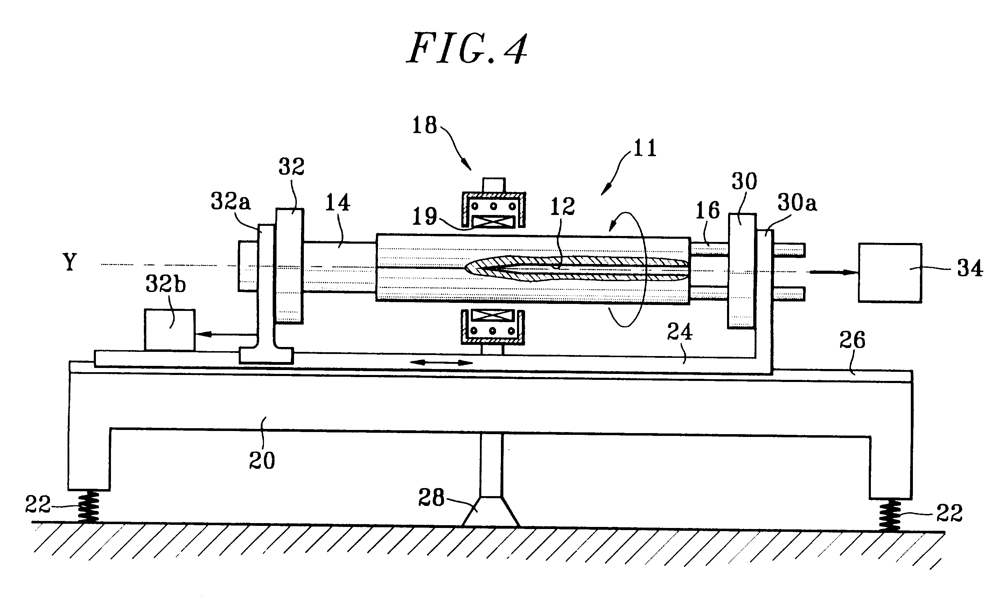

On rappelle brièvement que cet usinage comprend la réalisation, sur chaque préforme élémentaire, de deux méplats longitudinaux perpendiculaires l'un à l'autre et parallèles à l'axe de cette préforme élémentaire, comme cela est expliqué dans le document (1) en liaison avec les figures 3 et 4 de ce document (1).

La figure 1 des dessins annexés illustre schématiquement, en coupe transversale, le profil ainsi obtenu pour chaque préforme élémentaire 2.

Après ce premier usinage, on effectue un deuxième usinage de chaque préforme élémentaire 2.

Ce deuxième usinage consiste à former un chanfrein 4 au niveau de l'arête vive 6 (figure 1) de chaque préforme élémentaire 2.

Ce chanfrein 4, qui constitue ainsi un petit méplat parallèle à l'axe longitudinal X de la préforme élémentaire 2, est perpendiculaire au plan bissecteur du dièdre défini par les deux méplats précédemment usinés 8 et 10.

La largeur E de ce méplat 4 est environ égale à 5% du diamètre nominal D (diamètre extérieur) de la préforme élémentaire 2.

On assemble ensuite les quatre préformes élémentaires 2 comme le montre schématiquement en coupe transversale la figure 3 des dessins annexés.

L'assemblage 11 représenté sur la figure 3 laisse apparaître un trou central longitudinal 12 qui est parallèle à l'axe X de chacune des préformes élémentaires 2, ce trou étant délimité par quatre parois qui sont constituées par les quatre méplats 4 des préformes 2.

Ensuite, conformément à la présente invention, on soude cet assemblage pour obtenir la préforme à quatre coeurs que l'on veut réaliser.

Après quoi on pourra réaliser un étirage de cette préforme à quatre coeurs pour produire, à partir de celle-ci, une fibre optique multicoeur à quatre coeurs.

On pourra ensuite réaliser des mesures géométriques et mécaniques sur cette fibre optique à quatre coeurs.

Pour souder l'assemblage 11, on utilise un four à induction capable de porter cet assemblage à la température de fusion de celui-ci.

Dans l'exemple représenté, les préformes élémentaires sont en silice et l'on utilise un four à induction capable de chauffer l'assemblage à une température supérieure à 2000°C.

Pour réaliser le soudage souhaité, on utilise le four à induction horizontal décrit dans le document (3).

Ce four à induction est schématiquement représenté sur la figure 4 des dessins annexés.

Avant de réaliser ce soudage, on soude à une extrémité de l'assemblage 11 un barreau cylindrique en silice 14 ayant le même axe Y que l'assemblage, cet axe Y étant aussi l'axe du trou central 12.

A l'autre extrémité de l'assemblage 11, on soude un tube en silice 16 ayant également le même axe Y.

Ce tube a un diamètre intérieur suffisamment grand pour entourer l'extrémité du trou 12 située du côté de ce tube 16 et un diamètre extérieur suffisamment petit pour que toute la paroi extérieure de ce tube 16 soit en contact avec l'extrémité correspondante de l'assemblage 11.

L'assemblage 11, muni du barreau 14 et du tube 16, est monté sur le tour verrier qui est associé au four à induction 18.

Le suscepteur 19 de ce dernier est en graphite ou en zircone comme cela est expliqué dans le document (3).

On a très schématiquement représenté ce tour verrier sur la figure 4 des dessins annexés.

On rappelle brièvement qu'il comprend :
- un support rigide fixe 20 dont les extrémités sont montées sur des moyens d'amortissement 22,
- un autre support rigide 24 qui est déplaçable en translation sur une glissière 26 que comporte le support 20,
- un support fixe 28 sur lequel est monté le four à induction 18, et
- deux mandrins 30 et 32 coaxiaux qui sont montés sur le support déplaçable 24 et situés de part et d'autre du four à induction 18.

Dans l'exemple représenté, on a modifié ce tour verrier : le mandrin 32 est monté sur une poupée mobile 32a qui est déplaçable horizontalement sur le support 24, d'une façon précise et régulière, grâce à un moteur 32b, pour préétirer de façon précise et contrôlée l'assemblage pendant la soudure de celui-ci.

Le mandin 30 est, quant à lui, monté sur une poupée 30a fixe par rapport au support 24.

On voit sur la figure 4 que l'assemblage 11 traverse le suscepteur 19 du four à induction et que le mandrin 30 maintient le tube 16 tandis que l'autre mandrin 32 mobile maintient le barreau 14.

Au tour verrier sont adjoints des moyens de pompage 34 permettant de mettre le tube 16 et donc le trou central 12 en dépression.

Ces moyens de pompage 34 sont raccordés au tube 16 par un raccord tournant étanche non représenté.

Ces moyens de pompage 34 sont prévus pour créer un vide partiel de l'ordre de -3000 Pa dans ce trou central.

On fait fonctionner le tour verrier (y compris le moteur 32b) pour animer les deux mandrins et donc l'assemblage des préformes élémentaires d'un mouvement de rotation à environ 15 tours/minute et pour animer, par rapport au support 20, le mandrin 30 d'un mouvement de translation à une vitesse d'environ 15 mm/minute et le mandrin 32 d'un mouvement de translation à une vitesse d'environ 20 mm/mn pour préétirer l'assemblage pendant l'opération de soudure et créer ainsi des forces de rappel transversales qui s'ajoutent aux forces de rétreint ("collapsing") créées par la dépression dont il sera question plus loin.

De plus, le four à induction est porté à une température d'environ 2200°C.

Sur la figure 4 des dessins annexés, le mouvement de translation de l'assemblage 11 de préformes élémentaires par rapport au four à induction a lieu de la droite vers la gauche, l'extrémité de cet assemblage, qui est soudée au barreau 14, se trouvant initialement dans le four à induction.

Ce mouvement de translation permet ainsi de faire passer l'ensemble de l'assemblage à travers le four à induction.

Au cours de ce passage dans le four à induction, les préformes élémentaires sont légèrement étirées et soudées les unes aux autres et le trou central disparaît par rétreint.

Ce rétreint est facilité par la dépression appliquée dans le trou central par l'intermédiaire du tube 16 et par le léger préétirage de l'assemblage pendant l'opération de soudure.

Si on le souhaite, on peut faire passer plusieurs fois l'assemblage dans le four pour améliorer la soudure des préformes élémentaires.

Après refroidissement, on obtient la préforme à quatre coeurs souhaitée.

On précise que la distorsion apportée par la soudure de l'assemblage est négligeable (inférieure à 2‰).

On a vérifié que, sur 100 mesures effectuées sur 5 assemblages, les distorsions initiale et finale étaient très proches.

La différence représente la surface du trou perdue à la périphérie et le préétirage effectué (quelques centimètres pour 25 cm).

On précise de plus que, lors de l'étirage de la préforme à quatre coeurs ainsi obtenue, l'assemblage étant parfaitement soudé (sans bulle d'interface), les conditions de tension sont choisies pour ne pas augmenter de plus de 2‰ la distorsion due à la soudure.

Ces conditions de tension coïncident avec des tensions de fibrage tout à fait classiques (typiquement égales à 80g) et la résistance mécanique est la même que celle d'une fibre monomode circulaire à un seul coeur.

La présente invention n'est pas limitée à la fabrication d'une préforme à quatre coeurs.

Elle s'applique également à la fabrication de préformes à plus de quatre coeurs ou même à deux ou trois coeurs, du genre de celles qui conduisent aux fibres multicoeurs schématiquement représentées en coupe transversale sur les figures 7, 8 et 10 à 13 du document (1).

On peut être ainsi amené à réaliser, conformément à l'invention, des assemblages de préformes élémentaires comprenant plusieurs trous longitudinaux, parallèles aux axes de ces préformes élémentaires.

Ceci est schématiquement illustré, en coupe transversale, sur la figure 5 des dessins annexés où l'on voit un assemblage de préformes élémentaires 35 qui, après soudage dans le tour verrier précédemment mentionné, conduit à une préforme multicoeur dont l'étirage donne une fibre optique à sept coeurs, du genre de celle qui est schématiquement représentée sur la figure 10 du document (1).

On voit sur la figure 5 des dessins annexés que l'assemblage comprend alors six trous longitudinaux 36 parallèles les uns aux autres.

Pour obtenir ces trous, après avoir réalisé le premier usinage des sept préformes élémentaires pour y former les méplats souhaités, on forme les chanfreins nécessaires 38 au niveau des arêtes vives de chaque préforme élémentaire.

Après assemblage de ces préformes élémentaires de la figure 5, on obtient les six trous 36 délimités chacun par trois chanfreins 38.

On précise que, en vue du soudage dans le four à induction du tour verrier, on choisit et on soude au préalable le tube en silice de manière que la paroi interne de ce tube entoure l'ensemble des six trous longitudinaux ainsi formés pour pouvoir mettre ces six trous longitudinaux en dépression par l'intermédiaire de ce tube.

Dans un mode de mise en oeuvre non représenté, on utilise le tour verrier du document (3) avec une poupée 32a fixe par rapport au support 24.

Dans ce cas, on ne fait pas de préétirage.

Cependant, pour des raisons données plus haut, un tel préétirage est préférable.

Les documents cités dans la présente description sont les suivants :
***(1)*** FR-A-2 701 571, "Guides optiques multicoeurs de grande précision et de petites dimensions et procédé de fabrication de ces guides", invention de Georges Le Noane, Philippe Grosso et Isabelle Hardy, correspondant à EP-A-0 611 973 et à US-A-5,519,801.
***(2)*** FR-A-2 688 318, "Conducteur optique multiguides", ALCATEL CABLE.
***(3)*** FR-A-2 677 972, "Procédé et dispositif pour la fabrication de préformes pour fibres optiques", invention de Georges Le Noane et Isabelle Hardy, correspondant à EP-A-0 519 834 et à US-A-5,318,612.
***(4)*** EP-A-0 519 834, "procédé et dispositif pour la fabrication de préformes pour fibres optiques".

## Revendications

1. Procédé de fabrication d'une préforme multicoeur destinée à fournir, par étirage de cette préforme, une fibre optique multicoeur, ce procédé étant caractérisé en ce qu'il comprend les étapes suivantes :
- on fabrique une pluralité de préformes élémentaires (2, 35),
- on effectue un premier usinage de ces préformes élémentaires de manière à obtenir, après assemblage de ces préformes, le modèle géométrique choisi pour la fibre optique multicoeur,
- on effectue un deuxième usinage des préformes élémentaires de manière que l'assemblage (11) de celles-ci présente au moins un trou longitudinal (12, 36),
- on assemble les préformes élémentaires ainsi usinées suivant le modèle géométrique choisi, et
- on utilise un four à induction (18), qui est capable de porter l'assemblage à sa température de fusion et par rapport auquel cet assemblage subit des mouvements relatifs de translation et de rotation, pour chauffer l'assemblage et souder les préformes élémentaires les unes aux autres, tout en mettant chaque trou en dépression, chaque trou disparaissant par rétreint au cours du soudage des préformes élémentaires les unes aux autres.

2. Procédé selon la revendication 1, dans lequel l'assemblage est préétiré de quelques dizaines de millimètres et de façon précise et régulière pendant qu'il est chauffé.

3. Procédé selon l'une quelconque des revendications 1 et 2, dans lequel les préformes élémentaires (2, 35) sont fabriquées avec une grande précision, cette précision étant compatible avec celle qui est désirée pour la fibre multicoeur.

4. Procédé selon l'une quelconque des revendications 1 à 3, dans lequel le premier usinage comprend la formation, sur chaque préforme élémentaire, d'un ou d'une pluralité de méplats (8, 10) parallèlement à l'axe (X) de cette préforme, permettant l'assemblage des préformes élémentaires suivant le modèle géométrique choisi.

5. Procédé selon la revendication 4, dans lequel on fabrique quatre préformes élémentaires (2) de même diamètre extérieur, le premier usinage comprend la formation, sur chaque préforme élémentaire, de deux méplats (8, 10) longitudinaux et perpendiculaires qui définissent une arête vive (6), de manière à obtenir, par assemblage des préformes élémentaires, une préforme multicoeur à quatre coeurs, et le deuxième usinage comprend la formation d'un chanfrein (4) sur l'arête vive de chaque préforme élémentaire de manière que l'assemblage comprenne un trou central longitudinal (12).

6. Procédé selon la revendication 5, dans lequel la largeur du chanfrein (4) de chaque préforme élémentaire est de l'ordre de 5% du diamètre (D) de cette préforme élémentaire.

7. Procédé selon la revendication 4, dans lequel l'assemblage comprend N préformes élémentaires (35) de même diamètre extérieur, N étant un nombre entier différent de 4, et le deuxième usinage comprend la formation d'au moins un chanfrein (38) sur chaque préforme élémentaire, les chanfreins étant choisis pour obtenir des trous longitudinaux dans l'assemblage et casser les arêtes vivies des préformes élémentaires.

8. Procédé selon l'une quelconque des revendications 1 à 7, dans lequel le four à induction (18) comprend un suscepteur (19) en graphite ou en zircone.

9. Procédé selon l'une quelconque des revendications 1 à 8, dans lequel le four est horizontal.

10. Procédé selon l'une quelconque des revendications 1 à 9, dans lequel on soude respectivement aux deux extrémités de l'assemblage un barreau (14) et un tube (16) à travers lequel chaque trou est mis en dépression.

11. Procédé selon l'une quelconque des revendications 1 à 10, dans lequel la dépression est environ égale à -3000 Pa.

12. Procédé selon l'une quelconque des revendications 1 à 11, dans lequel la vitesse de translation de l'assemblage (11) par rapport au four est environ égale à 15 mm par minute.

## Patentansprüche

1. Verfahren zur Herstellung einer Mehrkern-Vorform, um durch Ziehen dieser Vorform eine optische Mehrkernfaser zu erhalten,
wobei dieses Verfahren **dadurch gekennzeichnet** ist, dass es außerdem die folgenden Schritte umfasst:
- Herstellen einer Vielzahl elementarer Vorformen (2, 35),
- Durchführen einer ersten Bearbeitung dieser elementaren Vorformen, um nach dem Zusammenbau dieser Vorformen das für die optische Mehrkernfaser gewählte geometrische Muster zu erhalten,
- Durchführen einer zweiten Bearbeitung der elementaren Vorformen, sodass der Zusammenbau (11) aus diesen wenigstens ein Längsloch (12, 36) aufweist,
- Zusammenbauen der so bearbeiteten elementaren Vorformen nach dem gewählten geometrischen Muster, und
- Benutzen eines Induktionsofens (18), der fähig ist, den Zusammenbau auf seine Schmelztemperatur zu bringen und in Bezug auf den dieser Zusammenbau Translations- und Rotations-Relativbewegungen ausgesetzt ist, um den Zusammenbau zu erhitzen und die elementaren Vorformen miteinander zu verschweißen und dabei in jedem Loch Unterdruck herzustellen, wobei jedes Loch im Laufe der Verschweißung der elementaren Vorformen miteinander durch Querschnittsverminderung verschwindet.

2. Verfahren nach Anspruch 1, bei dem der Zusammenbau, während er erhitzt wird, um einige zehn Millimeter vorgezogen wird, und dies genau und gleichmäßig.

3. Verfahren nach einem der Ansprüche 1 und 2, bei dem die elementaren Vorformen (2, 35) mit einer großen Genauigkeit hergestellt werden, wobei diese Genauigkeit mit derjenigen kompatibel ist, die für die Mehrkernfaser gewünscht wird.

4. Verfahren nach einem der Ansprüche 1 bis 3, bei dem die erste Bearbeitung an jeder elementaren Vorform die Bildung einer oder mehrerer zu der Achse (X) dieser Vorform parallelen Anflachungen (8, 10) umfasst, die den Zusammenbau der elementaren Vorformen nach dem gewählten geometrischen Muster ermöglichen.

5. Verfahren nach Anspruch 4, bei dem man vier elementare Vorformen (2) mit demselben Außendurchmesser herstellt, wobei die erste Bearbeitung an jeder elementaren Vorform die Bildung von zwei zueinander senkrechten Längsanflachungen (8, 10) umfasst, die eine scharfe Kante (6) definieren, um durch Zusammenbau der elementaren Vorformen eine Mehrkern-Vorform mit vier Kernen zu erhalten, und die zweite Bearbeitung die Bildung einer Fase (4) an der scharfen Kante jeder elementaren Vorform umfasst, sodass der Zusammenbau ein zentrales Längsloch (12) enthält.

6. Verfahren nach Anspruch 5, bei dem die Breite der Fase (4) jeder elementaren Vorform in der Größenordnung von 5% des Durchmessers (D) dieser elementaren Vorform ist.

7. Verfahren nach Anspruch 4, bei dem der Zusammenbau N elementare Vorformen (35) desselben Außendurchmessers aufweist, wobei N eine andere Ganzzahl als 4 ist, und die zweite Bearbeitung die Bildung von wenigstens einer Fase (38) an jeder elementaren Vorform umfasst, wobei die Fasen gewählt werden, um in dem Zusammenbau Längslöcher zu erhalten und die scharfen Kanten der elementaren Vorformen zu brechen.

8. Verfahren nach einem der Ansprüche 1 bis 7, bei dem der Induktionsofen (18) einen Suszeptor (19) aus Graphit oder Zirkon umfasst.

9. Verfahren nach einem der Ansprüche 1 bis 8, bei dem der Ofen horizontal ist.

10. Verfahren nach einem der Ansprüche 1 bis 9, bei dem man an die beiden Enden des Zusammenbaus jeweils einen Stab (14) schweißt und ein Rohr (16), durch das in jedem Loch Unterdruck hergestellt wird.

11. Verfahren nach einem der Ansprüche 1 bis 10, bei dem der Unterdruck ungefähr gleich -3000 Pa ist.

12. Verfahren nach einem der Ansprüche 1 bis 11, bei dem die Translationsgeschwindigkeit des Zusammenbaus (11) in Bezug auf den Ofen ungefähr gleich 15 mm pro Minute beträgt.

## Claims

1. Process for making a multicore preform designed to make a multicore optical fibre by drawing this preform, this process being characterized in that it comprises the following steps:
- a number of elementary preforms (2, 35) are made,
- these elementary preforms are machined a first time such that when they are assembled, the geometric model chosen for the multicore optical fibre is obtained,
- the elementary preforms are machined again, so that the assembly (11) has at least one longitudinal hole (12, 36),
- the elementary preforms thus machined are assembled in accordance with the chosen geometrical model, and
- an induction furnace (18) is used capable of increasing the assembly to its melting temperature and with respect to which this assembly is subject to relative translation and rotation movements to heat it and weld the elementary preforms to each other, while applying a vacuum to each hole, each hole disappearing by collapsing when the elementary preforms are welded to each other.

2. Process according to claim 1, in which the assembly is predrawn by several tens of millimetres, precisely and uniformly while it is heated.

3. Process according to either of the claims 1 and 2, in which the elementary preforms (2, 35) are made with high precision, this precision being compatible with what is necessary for the multicore fibre.

4. Process according to any one of the claims 1 to 4, in which the first machining includes formation of forming one or several flats (8, 10) on each elementary preform parallel to the (X) axis of this preform, so that elementary preforms can be assembled in accordance with the chosen geometric model.

5. Process according to claim 4, in which four elementary preforms (2) with the same outside diameter are made, the first machining consisting of forming two longitudinal flats (8, 10) perpendicular to each other and defining a sharp edge (6) on each elementary preform, so that a multicore preform with four cores can be obtained by assembling the elementary preforms, and the second machining consists of forming a chamfer (4) on the sharp edge of each elementary preform such that the assembly comprises a longitudinal central hole (12).

6. Process according to claim 5, in which the width of the chamfer (4) on each elementary preform is of the order of 5% of the diameter (D) of this elementary preform.

7. Process according to claim 4, in which the assembly comprises N elementary preforms (35) with the same outside diameter, where N is an integer not equal to 4, and the second machining consists of forming at least one chamfer (38) on each elementary preform, the chamfers being chosen to obtain longitudinal holes in the assembly and to cut off the sharp edges on the elementary preforms.

8. Process according to any one of the claims 1 to 7, in which the induction furnace (18) comprises a graphite or zirconium susceptor (19).

9. Process according to any one of the claims 1 to 8, in which the furnace is horizontal.

10. Process according to any one of the claims 1 to 9, in which a bar (14) and a tube (16) through which a vacuum is created in each hole, are welded to the two ends of the assembly.

11. Process according to any one of the claims 1 to 10, in which the vacuum is approximately equal to -3000 Pa.

12. Process according to any one of the claims 1 to 11, in which the translation speed of the assembly (11) with respect to the furnace is approximately equal to 15 mm per minute.
